# FASCICULE DE BREVET EUROPEEN

(11) **EP 2 021 820 B1**
(45) Date de publication et mention de la délivrance du brevet: **22.06.2011**
(21) Numéro de dépôt: 07728943.7
(22) Date de dépôt: 09.05.2007
(51) Int. Cl.: G01S 3/14, G01S 3/48, G01S 13/68, G01S 13/91

(54) **PROCEDE DE DETERMINATION DE LA POSITION, NOTAMMENT EN ELEVATION, D'UNE CIBLE VOLANT A TRES BASSE ALTITUDE**
VERFAHREN ZUR BESTIMMUNG DER POSITION INSBESONDERE IN BEZUG AUF HÖHE EINES AUF SEHR NIEDRIGER HÖHE FLIEGENDEN ZIELS
METHOD FOR DETERMINING THE POSITION, PARTICULARLY IN ELEVATION, OF A TARGET FLYING AT VERY LOW ALTITUDE

(30) Priorité: 16.05.2006 FR 0604373
(43) Date de publication de la demande: 11.02.2009
(73) Titulaire: THALES, 92200 Neuilly sur Seine (FR)
(72) Inventeur: CORNIC, Pascal, F-29290 Saint Renan (FR); BARRAUX, Eric, F-29200 Brest (FR); GARREC, Patrick, F-33700 Merignac (FR)
(74) Mandataire: Lucas, Laurent Jacques
(86) Numéro de dépôt international: PCT/EP2007/054491
(87) Numéro de publication internationale: WO 2007/131923

(56) Documents cités:
- FR-A1- 2 251 829
- FR-A1- 2 252 578
- US-A- 3 742 505
- US-A- 5 812 091
- LITVA J ET AL: "A new technique for low-angle radar tracking" COMMUNICATIONS, COMPUTERS AND SIGNAL PROCESSING, 1991., IEEE PACIFIC RIM CONFERENCE ON VICTORIA, BC, CANADA 9-10 MAY 1991, NEW YORK, NY, USA,IEEE, US, 9 mai 1991 (1991-05-09), pages 124-127, XP010039397 ISBN: 0-87942-638-1
- SHI-WEI GAO ET AL: "Radar low-angle tracking with subarray level ML tracking algorithms" DIGITAL SIGNAL PROCESSING 2, ESTIMATION, VLSI. SAN FRANCISCO, MAR. 23, vol. VOL. 5 CONF. 17, 23 mars 1992 (1992-03-23), pages 453-456, XP010059067 ISBN: 0-7803-0532-9

## Description

La présente invention concerne un procédé de détermination de la position notamment de l'élévation d'une cible volant à très basse altitude. Cette invention peut notamment être utilisée dans le cadre du guidage de drônes en phase finale d'atterrissage.

Le guidage d'un drône en phase d'atterrissage nécessite de localiser celui-ci de manière précise afin de calculer sa trajectoire jusqu'au point de toucher sur la piste et de corriger sa trajectoire pendant toute la phase d'atterrissage. A cette fin un système composé d'un radar, d'au moins une balise au sol et d'au moins une balise embarquée à bord du drône peut être mis en oeuvre. Ce système a pour objectif d'améliorer la précision de la localisation. Cependant la localisation en élévation du drône est soumise à des imprécisions, liées à la présence de réflexions multiples du signal émis par la cible sur le sol. Les interférences liées à la réflexion du signal sur le sol sont particulièrement importantes du fait de la faible valeur de l'angle d'incidence du drône pendant la phase d'atterrissage.

Les résultats de la localisation sont généralement améliorés en filtrant les signaux réfléchis par le sol ainsi qu'en minimisant la contribution de ces signaux par une optimisation de l'orientation et de la directivité du faisceau de l'antenne radar.

A cet effet, une première solution consiste à réduire la largeur du faisceau d'antenne et à pointer celui-ci en direction de la cible, afin de minimiser la contribution du signal réfléchi par le sol en plaçant les trajets réfléchis par le sol dans des creux du diagramme d'antenne. Cette solution n'est envisageable que si les contraintes pesant sur la dimension de l'antenne et son implantation physique ne sont pas trop importantes. Elle nécessite en effet un matériel encombrant et coûteux. De fait cette solution est rarement utilisée dans un contexte où l'on doit disposer d'un radar mobile par exemple.

D'autres solutions sont connues pour améliorer la localisation d'une cible volant à très basse altitude en cas de réflexions multiples. Parmi celles-ci, les solutions suivantes peuvent être utilisées seules ou de manière complémentaire les unes des autres.

Par exemple, une seconde solution consiste à utiliser des traitements adaptatifs à haute résolution sur le signal reçu. Ces traitements présentent le double inconvénient d'être difficiles à mettre en oeuvre et de donner de mauvais résultats si les hypothèses faites sur le modèle varient, même très légèrement. En outre, ils exigent une capacité de calcul importante, ce qui augmente le coût du système.

Une troisième solution réside dans l'augmentation de la résolution distance et doppler. Cette augmentation de résolution ne peut cependant être effectuée que si le radar est positionné à un niveau suffisamment élevé par rapport au sol. Ceci n'est pas toujours possible compte tenu du contexte d'emploi qui contraint fortement la hauteur des antennes radar, toujours par exemple, pour un radar mobile.

Une quatrième solution vise à augmenter la diversité des fréquences d'émission. Néanmoins, diversifier les fréquences nécessite de disposer d'une plage de fréquences importante afin que ceci soit efficace. Ce qui est souvent incompatible avec l'application en jeu et n'est, par ailleurs, pas toujours autorisé par les organismes d'allocation des fréquences.

La demande de brevet FR 2 251 829 A1 décrit notamment un moyen pour déterminer si une émission provenant d'un avion se situe au-dessus ou en-dessous d'un angle d'élévation déterminé dans l'espace.

Un but de l'invention est notamment de pallier les inconvénients précités. A cet effet, l'invention a pour objet un procédé de détermination de l'élévation d'une cible proche du sol tel que décrit par les revendications.

L'invention a notamment pour principaux avantages qu'elle s'adapte à des modèles de radars existants, qu'elle peut être mise en oeuvre sur différents types d'antennes, qu'elle utilise un traitement simple à mettre en oeuvre et qu'elle nécessite des moyens de calcul peu important.

D'autres caractéristiques et avantages de l'invention apparaîtront à l'aide de la description qui suit, faîte en regard des dessins annexés qui représentent :
- la figure 1, un aéronef en phase d'atterrissage où figurent les éléments d'un dispositif utilisé par le procédé de l'invention,
- la figure 2, le phénomène de réflexion de l'image de la cible consécutivement à l'émission d'une onde radar,
- la figure 3, le diagramme d'antenne constitué par la cible et son image,
- la figure 4a, le signal d'interférence reçu au niveau de l'antenne,
- la figure 4b, les amplitudes minimums et maximums du signal d'interférence reçu au niveau de l'antenne.
- la figure 5, les différentes phases de traitement du procédé,
- la figure 6, un exemple d'échantillonnage du signal reçu en amplitude sur ½ période,
- la figure 7, un exemple d'échantillonnage du signal reçu en amplitude sur 1/7 ^{ième} de période,
- la figure 8a, le phénomène de réflexion dû à l'image de la cible dans le cas d'un sol horizontal,
- la figure 8b, le phénomène de réflexion dû à l'image de la cible dans le cas où le sol n'est pas horizontal,
- la figure 9, le phénomène de réflexion dans le cas où le sol n'est ni plan ni horizontal.

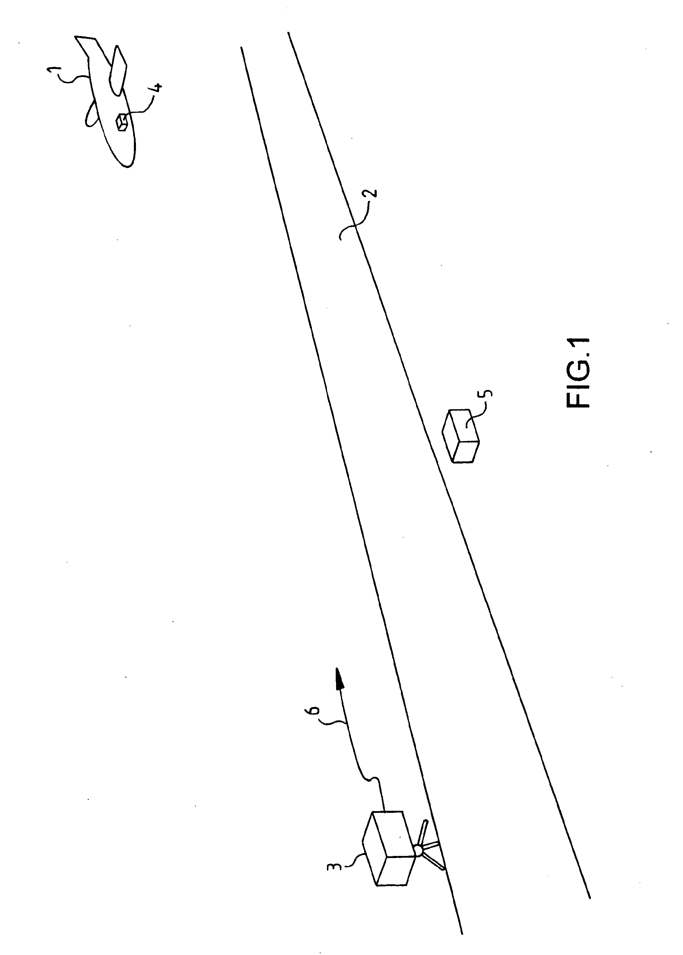

La figure 1 présente un aéronef 1 en phase d'atterrissage sur une piste 2. Cet aéronef, par exemple un drône, est guidé par un système composé d'un radar 3, d'une balise 4 embarquée à bord du drône, et d'une balise 5 au sol. Ce système de guidage est notamment décrit dans la demande de brevet français n° 04 12313. Pour participer au guidage de l'aéronef 1, le radar doit connaître la position de celui-ci, c'est-à-dire ses coordonnées en azimuth et en élévation. A cet effet, le radar émet un signal 6 en direction de l'aéronef 1, que l'on appellera cible par la suite. La cible peut se comporter soit comme un réflecteur passif soit comme un émetteur grâce à la balise 4 embarquée. La description de la présente invention se place dans le cas de l'utilisation d'un émetteur à bord de la cible, mais l'invention peut aussi bien s'appliquer au cas d'un émetteur passif.

Il a été indiqué précédemment que des signaux ré-émis par la cible pouvaient par ailleurs se réfléchir sur le sol avant d'être captés par le radar. L'état de la piste 2 peut être tel que la réflexion est quasi-spéculaire, ces réflexions produisant des mesures aberrantes.

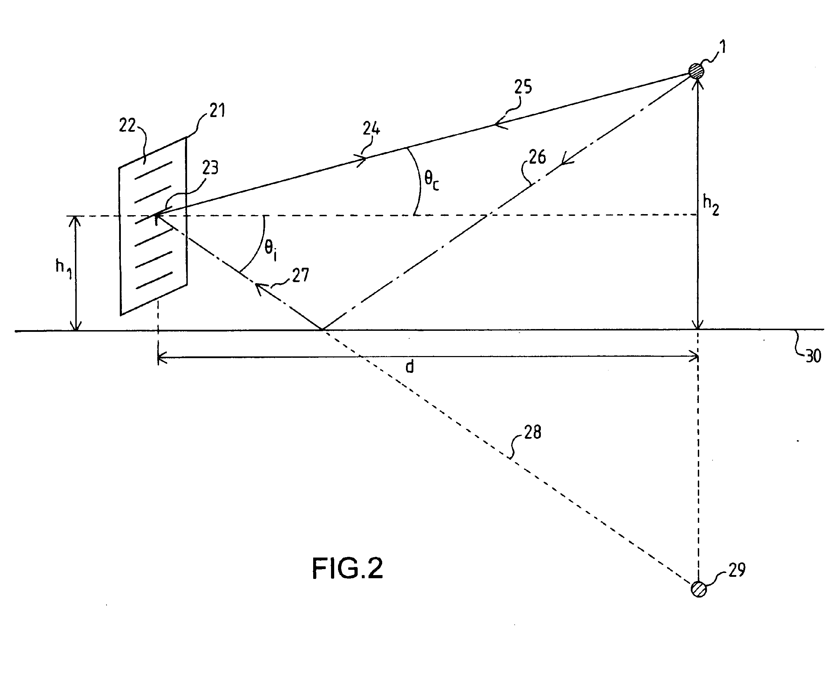

La figure 2 illustre les chemins des signaux ré-émis par la cible 1 de manière directe et indirecte. Sur cette figure, seule l'antenne 21 du radar 3 est représentée. Cette antenne peut être utilisée en émission/réception ou seulement en réception. Dans cet exemple, l'antenne 21 est une antenne réseau dite complète c'est-à-dire qu'elle est constituée de N sous-réseaux 22 espacés régulièrement dans le plan vertical et respectant les conditions d'interdistance nécessaires afin de ne pas créer de lobes ambigus. La présente invention peut par ailleurs s'appliquer également au cas d'une antenne lacunaire. Chacun des sous-réseaux de l'antenne 21 correspond par exemple à une ligne de plusieurs éléments rayonnants, dont la résultante correspond à un centre de phase dans le plan élévation.

Sur la figure 2, les sous-réseaux sont représentés par des lignes constituées d'éléments rayonnants qui reçoivent un signal de même phase selon le plan d'élévation. Ces lignes peuvent être horizontales comme c'est le cas sur la figure 2 ou bien non horizontales. Par la suite, les lignes sont considérées comme horizontales.

Afin de simplifier le schéma, seuls les rayonnements émis et/ou reçus par un sous-réseau 23 sont représentés. La ligne 23 correspondante est située à une hauteur h₁ par rapport au sol. Cette ligne émet et/ou reçoit un signal 24 en direction de la cible 1. La cible, quant à elle, est située à une hauteur h₂ du sol et à une distance projetée au sol d du radar. Le signal résultant, ré-émis par la cible, se compose entre autre des signaux suivants captés par la ligne 23 :
- d'une part un signal direct 25 qui part en direction de la ligne 23 et forme avec l'horizontale un angle θ_{c} aussi nommé angle d'élévation de la cible vue du radar,
- d'autre part un signal 26 lui-même réfléchi par le sol 30.

Ce dernier signal 26 est réfléchi de manière quasi-spéculaire par le sol. Il se réfléchit en un signal 27 en direction de la ligne 23. L'angle θᵢ formé entre le signal 27 réfléchi par le sol et l'horizontale est appelé angle d'élévation de l'image vue par le radar. En effet, le signal 27 réfléchi par le sol peut être assimilé à un signal 28 émis par l'image 29 de la cible par rapport au sol. Le système ainsi constitué par la cible et son image forme un dipôle cible-image. Le signal capté par la ligne 23 se compose donc du signal 25 ré-émis par la cible et du signal 27 ré-émis par l'image.

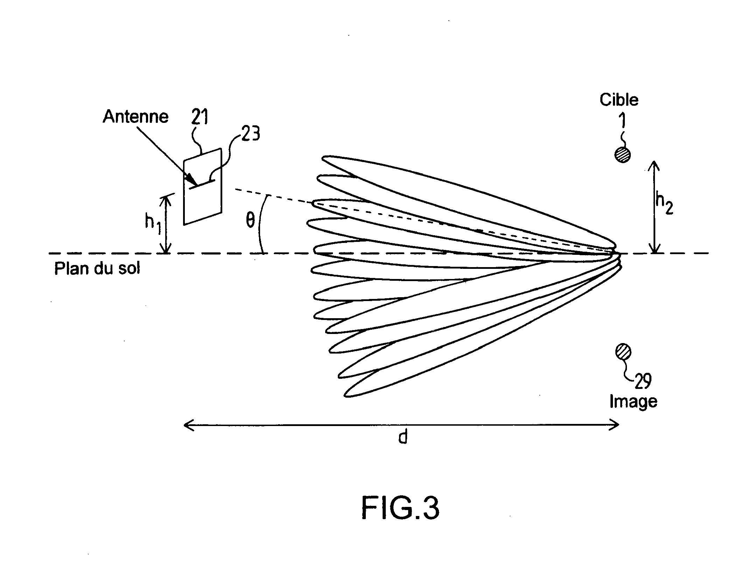

La figure 3 représente un diagramme d'antenne à large faisceau du type radar de veille. Plus particulièrement, cette figure illustre le diagramme d'antenne modélisé correspondant à un dipôle composé de la cible 1 et de son image 29. Cette modélisation revient à interpréter la totalité du signal, de forme sinusoïdale, provenant du bipôle cible-image au niveau de l'antenne comme s'il s'agissait d'un signal ré-émis par un système ponctuel situé au centre du dipôle.

Les grandeurs physiques caractérisant le diagramme à un instant donné sont les suivantes :
- d : la distance projetée au sol entre la cible et le radar,
- θ : l'angle de visée par rapport au plan horizontal du sol,
- h₁: la hauteur par rapport au sol de la ligne considérée sur l'antenne,
- h₂ : la hauteur de la cible par rapport au sol.

Le diagramme d'interférence résultant de la modélisation du signal ré-émis décrite précédemment est de la forme, à une constante multiplicative près : 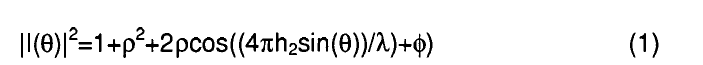 Où
- ρ représente l'amplitude du coefficient de réflexion sur le sol,
- φ est un déphasage entre le signal incident et le signal ré-émis,
- λ est la longueur d'onde du signal émis.

Etant donné que l'antenne radar se trouve proche du sol, que la cible est en phase d'atterrissage, et donc qu'elle se trouve également proche du sol, sa hauteur par rapport au sol est donc faible devant la distance d et on peut donc considérer que l'on a de faibles valeurs pour l'angle θ. Ceci permet donc de simplifier l'équation (1) afin d'obtenir pour l'interférence la formule suivante, en assimilant sin(θ) à θ :

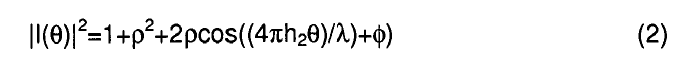

Si h₁ est la hauteur d'une ligne de l'antenne, toujours pour de faibles valeurs de θ, on a la relation suivante: ${h}_{1} = d \times θ$

Ce qui donne pour l'équation (2) la forme suivante : ${\left|l\left({h}_{1}\right)\right|}^{2} = 1 + {ρ}^{2} + 2 ⁢ ρcos \left(\left(4⁢{πh}_{2}⁢{h}_{1}\right)/λd\right) + φ )$

Cette relation (4) exprime l'allure de la courbe d'interférence en fonction de la hauteur h₁.

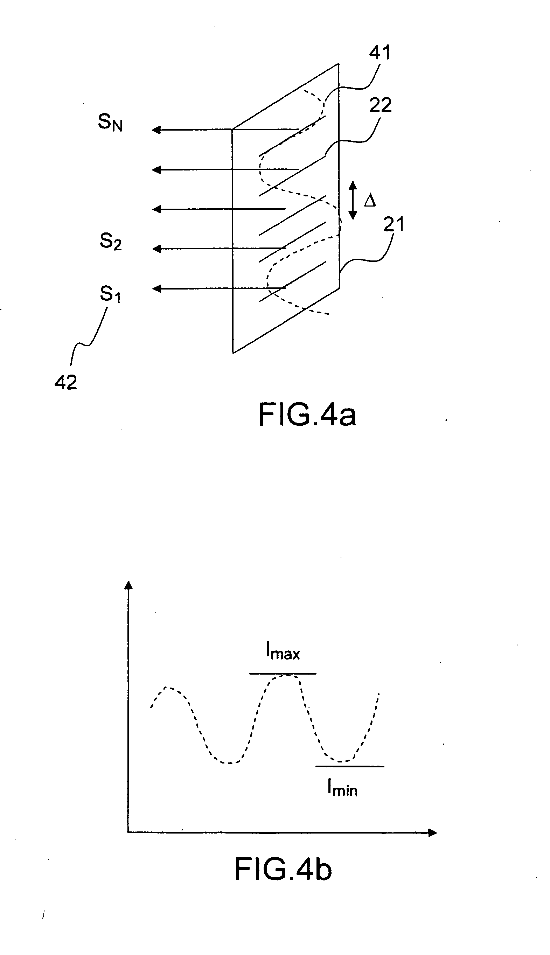

La figure 4a illustre le signal d'interférence 41 produit par le signal direct 25 et le signal réfléchi 27 au niveau de l'antenne 21 tel qu'exprimé par la relation (4). L'invention exploite ce signal d'interférence 41 présent au niveau de l'antenne. Plus particulièrement, le procédé selon l'invention extrait la hauteur h₂ à partir de ce signal d'interférence. Ce signal d'interférence est composé d'une partie constante 1+ρ² et d'une sinusoïde fonction de la hauteur de la cible h₂.

Le procédé selon l'invention utilise avantageusement l'existence d'un tel signal d'interférence 41 au niveau de l'antenne, l'amplitude et la période de ce signal n'étant pas connues à priori. Pour caractériser ce signal, un échantillonnage 42 : S₁, S₂" S_{N}, est effectué au niveau des lignes rayonnantes 22, 23 de l'antenne. L'échantillonnage peut être effectué de manière régulière dans l'espace si la distance Δ entre deux lignes rayonnantes consécutives est constante. Il peut également être adapté à un réseau de lignes non uniforme. L'échantillonnage peut donc dépendre de la structure de l'antenne.

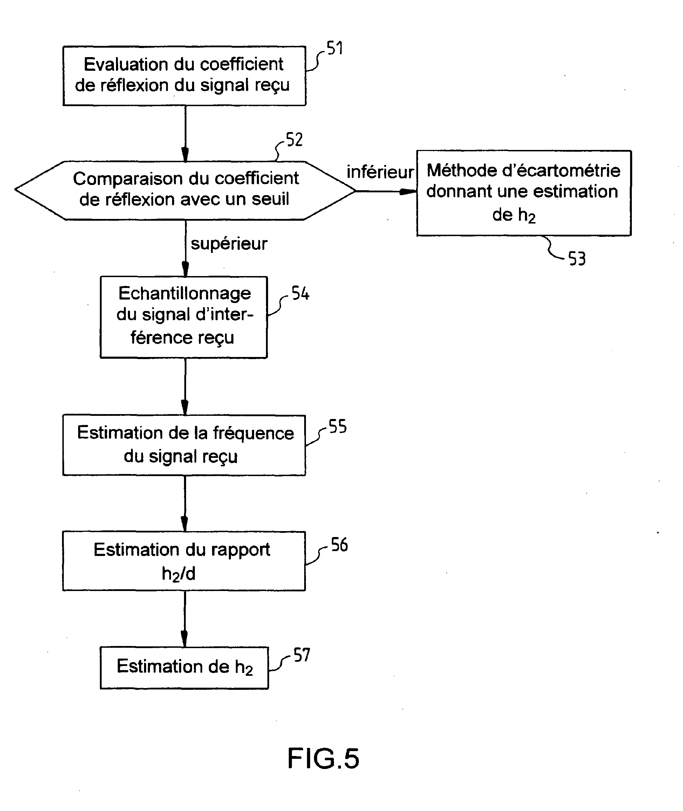

La figure 5 illustre les différentes étapes possibles pour la détermination de la hauteur h₂ à partir du signal d'interférence 41.

Une première étape 51 permet de déterminer la valeur de l'amplitude du coefficient de réflexion ρ sur le sol. Les amplitudes minimum et maximum du signal d'interférence illustrées sur la figure 4b sont données par les relations suivantes : *I*ₘₐₓ = (1+ρ)² et *I*ₘᵢₙ = (1-ρ)² *.* En conséquence, le rapport des amplitudes minimum et maximum est donné par $\frac{{I}_{min}}{{I}_{max}} = \frac{{\left(1-ρ\right)}^{2}}{{\left(1+ρ\right)}^{2}} ,$ d'où l'on déduit l'amplitude du coefficient de réflexion : $ρ = \left(1-\sqrt{Imin / Imax}\right) / \left(1+\sqrt{Imin / Imax}\right)$

Une fois la valeur de ρ ainsi calculée, dans une deuxième étape 52, cette valeur est comparée à un seuil donné qui peut être fixé par exemple à 0,5. Si la valeur de ρ est inférieure à ce seuil, on considère qu'il n'y a pas d'interférences dues à la réflexion du signal réfléchi par le sol. La localisation de la cible en élévation est alors réalisée au moyen d'un traitement classique d'écartométrie 53 de type monopulse par exemple. Dans le cas contraire où une réflexion due au dipôle cible-image est bien détectée, un traitement adapté au signal résultant de la cible et de son image est effectué.

Ce traitement commence par une étape 54 d'échantillonnage spatial du signal reçu sur chacune des lignes d'antenne tel qu'illustré par exemple sur la figure 4a. Cet échantillonnage nécessite avantageusement peu de valeurs, il peut notamment être réalisé pour une dizaine de valeurs. Dans la suite, le nombre des échantillons collectés sera représenté par n.

Dans une étape suivante 55, la fréquence spatiale du signal d'interférence va être estimée à partir de l'échantillonnage du signal réalisé dans l'étape précédente. Le principe de base de la détermination de la fréquence est le suivant :

Soit V un signal générique de la forme : $V \left(x\right) = cos \left(2⁢πfx+ϕ\right)$

Avec :
- ϕ, représentant une inconnue,
- x , la position d'une ligne sur le réseau de l'antenne
- *f*, la fréquence du signal reçu.

Afin d'estimer la fréquence f du signal global reçu, on considère par exemple un ensemble de n échantillons représenté par la grandeur *S* = (*s*₁,..., *sₙ)* du signal d'interférence *V*(*x*) échantillonné sur les positions *xᵢ = x*₀ + *i*Δ avec i prenant les valeurs de 1 à n, *x*₀ représentant la position d'une ligne quelconque servant de référence sur l'antenne et Δ étant le pas d'échantillonnage correspondant à la distance entre deux lignes rayonnantes consécutives. Ainsi pour deux lignes quelconques on obtient à partir de l'équation (7) la relation suivante quelque soit i et quelque soit k: ${s}_{i + k} + {s}_{i - k} = cos \left(2⁢{πfx}_{i + k}+ϕ\right) + cos \left(2⁢{πfx}_{i - k}+ϕ\right)$

Or par échantillonnage *xᵢ₊ₖ* = *xᵢ* + *k*Δ et de même *xᵢ₊ₖ* = *xᵢ - kΔ .*

La relation (8) devient alors quelque soit i et quelque soit k : ${s}_{i + k} + {s}_{i - k} = cos \left(2⁢{πfx}_{i}+ϕ+2⁢πfk⁢Δ\right) + cos \left(2⁢{πfx}_{i}+ϕ-2⁢πfk⁢Δ\right)$

Puis à l'aide de la relation suivante $cos \left(X-Y\right) + cos \left(X+Y\right) = 2 cos \left(X\right) ⁢ cos \left(Y\right)$
on obtient à partir de (9) la relation ${s}_{i + k} + {s}_{i - k} = 2 cos \left(2⁢{πfx}_{i}+ϕ\right) ⁢ cos \left(2⁢πfk⁢Δ\right)$

Comme d'après l'équation (7), *sᵢ* = cos (2π*fxᵢ* + ϕ), on obtient donc la relation : ${s}_{i + k} + {s}_{i - k} = 2 ⁢ {s}_{i} cos \left(2⁢πfk⁢Δ\right)$

ce qui mène à l'équation suivante : ${s}_{i + k} + {s}_{i - k} - 2 ⁢ {s}_{i} cos \left(2⁢πfk⁢Δ\right) = 0$

La résolution de cette équation permet d'obtenir une estimation de *f* . Cette estimation est obtenue par minimisation de la fonction *J* définie par : $J \left(W\right) = {\sum }_{i , k} \left|{s}_{i + k}+{s}_{i - k}-2⁢{s}_{i} cos \left(2⁢πWk Δ\right)\right|$

*f* est alors estimée par la valeur de W₀ qui minimise la fonctionnelle *J.* Soit : ${min}_{W} J \left(W\right) = J \left({W}_{0}\right)$

L'estimée *f̂* de *f* est alors donnée par : $\hat{f} = arg \left({min}_{W} J\left(W\right)\right) = {W}_{0}$

Dans le cadre du problème traité, un modèle du signal ré-émis provenant du bipôle cible-image peut être le suivant : $E \left(x\right) = A + α cos \left(2⁢πfx+ϕ\right) + b \left(x\right)$
où *(ϕ, A, α)* sont inconnues et *b*(*x*) représente un bruit blanc Gaussien de variance σ².

Dans ce cas, on considère n échantillons de ce signal $R = \left[\begin{matrix}{r}_{1} & = E ⁢ \left({x}_{0}+1⁢Δ\right) \\ ⋮ & \\ {r}_{n} & = E ⁢ \left({x}_{0}+n⁢Δ\right)\end{matrix}\right] .$

Les échantillons du bruit blanc Gaussien sont supposés indépendants entre eux et de même variance σ². Ils seront donc négligés par la suite.

Une première étape consiste par exemple à éliminer le terme A constant représentant l'amplitude du signal d'interférence 41 présent au niveau de l'antenne pour se ramener à un modèle du type sinusoïde plus bruit.

A cette fin un estimateur de la forme suivante peut être utilisé : $\hat{A} = \frac{1}{2} ⁢ \left({min}_{i = \left[1, 11\right]}⁢{r}_{i}+{max}_{i = \left[1, 11\right]}⁢{r}_{i}\right)$

Les échantillons R sont exprimés en fonction de l'estimateur *Â* de *A* . Ce qui conduit aux échantillons ${R}_{Bis} = \left[\begin{matrix}{r}_{1} - \hat{A} \\ ⋮ \\ {r}_{n} - \hat{A}\end{matrix}\right]$ sur lesquels est appliqué le principe de base de la détermination de *f* explicité précédemment. De la même manière, l'estimation de *f* est donc effectuée en minimisant la fonctionnelle suivante : $J \left(U\right) = {\sum }_{i , k} \left|{r}_{i + k}+{r}_{i - k}-2⁢{r}_{i} cos \left(2⁢πUk Δ\right)\right|$
La valeur de f recherchée est la valeur qui minimise la fonction J(U).

Il est à noter que certains des n échantillons retenus doivent être proches du minimum et du maximum du signal afin d'obtenir une bonne estimation *Â* de *A*. Dans le cas contraire, l'estimation *Â* risque d'être biaisée notamment si les n points de mesure couvrent moins d'une période du signal. Ceci est mis en évidence dans l'exemple qui suit.

A titre d'exemple, on utilise pour chaque résultat n échantillons du signal 17 reçus sur l'antenne avec par exemple n = 11. La forme du signal présenté est la suivante : $E \left(x\right) = A + α cos \left(2⁢πfx+ϕ\right) + b \left(x\right)$

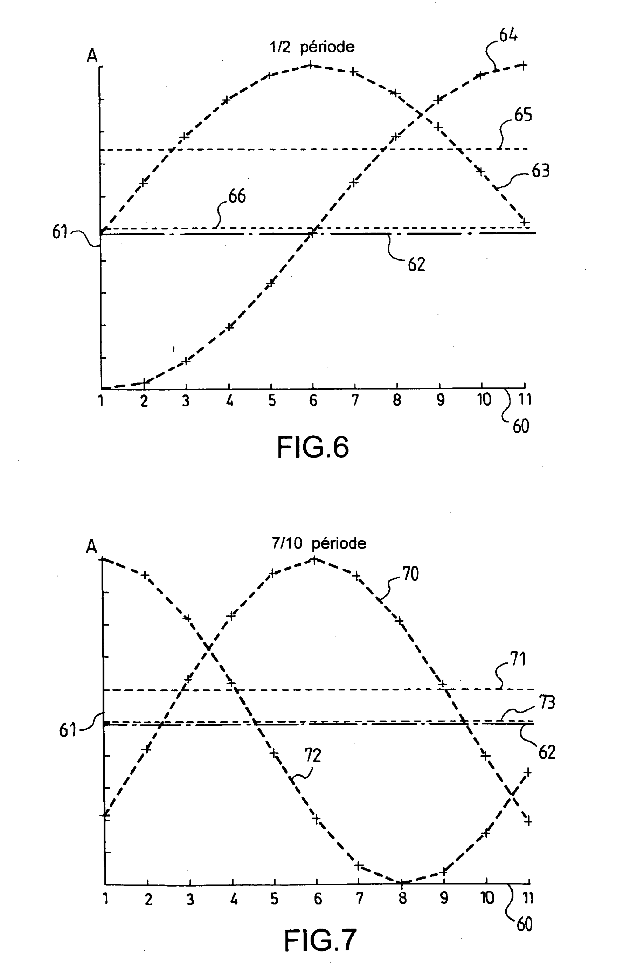

Sur chacune des figures 6 et 7, on retrouve en abscisse 60 les n échantillons, et en ordonnée 61 l'amplitude A du signal d'interférence présent au niveau de l'antenne. Chaque figure présente les résultats de l'estimation de A pour deux échantillons différents. La première figure 6 utilise deux échantillonnages 63 et 64 réalisés sur ½ période de signal de référence. Les résultats 65 et 66 obtenus respectivement pour l'échantillon 63 et 64 donnent des estimations de A qui diffèrent de près de 10%.

La seconde figure 7 utilise sur 7/10^{ième} de période deux échantillonnages 70 et 72 donnant respectivement les résultats 71 et 73 pour la valeur estimée de A. La différence entre les deux résultats est ici de l'ordre de 4%.

Ceci montre bien que les résultats de l'estimation de A peuvent être fortement biaisés si les échantillons couvrent seulement une petite partie de la période du signal. Ceci entraîne donc aussi une erreur importante sur l'estimation de *f*. Il est donc nécessaire de choisir correctement les échantillons utilisés, ce qui n'est pas toujours possible.

C'est pourquoi, de manière préférentielle, le terme constant A peut être éliminé par soustraction directe du signal reçu sur une ligne au signal reçu sur la ligne suivante. On obtient ainsi un nouvel échantillonnage R' de la forme suivante: $Rʹ = \left[\begin{matrix}{{r}^{ʹ}}_{1} = {r}_{1} - {r}_{2} \\ {{r}^{ʹ}}_{2} = {r}_{2} - {r}_{3} \\ ⋮ \\ {{r}^{ʹ}}_{n - 1} = {r}_{n - 1} - {r}_{n}\end{matrix}\right] .$ Les traitements d'estimation de
*f* sont ensuite les mêmes que ceux décrit précédemment.

Une fois l'estimation obtenue pour *f* , l'étape suivante 56 permet d'obtenir le rapport h₂/d, hauteur de la cible sur la distance entre le radar et la cible projetée au sol, de la façon suivante :
En considérant à un instant donné comme référence de phase et d'amplitude le chemin direct pour la première ligne, celle-ci reçoit un signal de valeur S₁ : ${S}_{1} = 1 + ρ \times {e}^{jϕ} \times {e}^{- j \left(2⁢π/λ\right) ⁢ 2 \left({h}_{1}⁢{h}_{2}/d\right)}$

Avec :
- ρ : le module du coefficient de réflexion sur le sol
- ϕ : la phase du coefficient de réflexion sur le sol
- λ : la longueur d'onde du signal émis par la cible

Les hypothèses sont les suivantes :
- ρ et ϕ sont constants pour les n signaux ré-émis,
- θ_{c} est identique pour les n signaux directs (on suppose que les signaux sont parallèles)

En posant Δ comme la distance entre la première et la seconde ligne, le signal reçu par la seconde ligne du réseau s'exprime de la façon suivante : ${S}_{2} = {e}^{j \left(2⁢π/λ\right) ⁢ Δ \times sin \left(θc\right)} ⁢ \left(1+ρ\times {e}^{jϕ}\times {e}^{- j \left(2⁢π/λ\right) ⁢ 2 ⁢ \left({h}_{2}⁢\left({h}_{1}+Δ\right)/d\right)}\right)$

Ce qui donne pour la (k-1)^{ième} ligne: ${S}_{1 + k} = {e}^{j \left(2⁢π/λ\right) ⁢ k \times Δ \times sin \left(θc\right)} ⁢ \left(1+ρ\times {e}^{jϕ}\times {e}^{- j \left(2⁢π/λ\right) ⁢ 2 ⁢ \left({h}_{2}⁢\left({h}_{1}+k\times Δ\right)/d\right)}\right)$

Et donc pour la k^{iéme} ligne : ${S}_{k} = {e}^{j \left(2⁢π/λ\right) ⁢ \left(k-1\right) \times Δ \times sin \left(θc\right)} ⁢ \left(1+ρ\times {e}^{jϕ}\times {e}^{- j \left(2⁢π/λ\right) ⁢ 2 ⁢ \left({h}_{2}⁢\left({h}_{1}+\left(k-1\right)\times Δ\right)/d\right)}\right)$

Le module du signal reçu pour chaque ligne est donc donné par la relation suivante : ${\left|{s}_{k}\right|}^{2} = {s}_{k} \times {{s}_{k}}^{*} = 1 + {ρ}^{2} + 2 ⁢ ρ cos \left(\left(2⁢π/λ\right)⁢2⁢\left({h}_{2}⁢\left({h}_{1}+\left(k-1\right)\times Δ\right)/d\right)+ϕ\right)$

En *posant* ϕ'=(2π/λ)2(*h*₂(*h*₁-*a)ld*)+ϕ, on obtient la relation suivante : ${\left|{s}_{k}\right|}^{2} = 1 + {ρ}^{2} + 2 ⁢ ρ cos \left(\left(2⁢π/λ\right)⁢2\left({h}_{2}\times k\times Δ )/d\right)+{ϕ}^{ʹ}\right)$

Cette relation fait apparaître une modulation d'amplitude sur la hauteur de l'antenne dont la fréquence *f* dépend directement de la hauteur de la cible par rapport au sol : $f = 2 ⁢ {h}_{2} / λd$
ce qui donne le rapport hauteur de la cible sur la distance projeté au sol entre le radar et la cible suivant : ${h}_{2} / d = λf / 2$

Le rapport h₂/d est donc défini pour une valeur de la longueur d'onde λ donnée.

La dernière étape 57 a notamment pour objectif de donner une estimation de la hauteur de la cible ainsi que des angles d'élévation. En considérant que la cible évolue à très basse altitude, les angles d'élévation ont notamment une faible valeur. Ainsi, une estimation d' de d peut être obtenue, par exemple par une mesure radar. Cette estimation d', du fait de la faible valeur des angles, peut être assimilée à la distance radiale r entre le centre de phase de l'antenne radar et la cible. Cette distance r étant mesurée par le radar. L'erreur commise en faisant cette estimation tend par ailleurs à diminuer au fur et à mesure que la cible se rapproche du sol. Les angles d'élévation décrits dans la figure 2 sont déterminés par les équations suivantes obtenues par construction :
- pour l'angle d'élévation θ_{c} de la cible vue du radar : ${θ}_{c} = artctg ⁢ \left(\frac{{h}_{2}}{d}-\frac{{h}_{1}}{dʹ}\right)$
- pour l'angle d'élévation θᵢ de l'image vue du radar : ${θ}_{i} = - artctg ⁢ \left(\frac{{h}_{2}}{d}+\frac{{h}_{1}}{dʹ}\right)$

Le rapport h₂/d ayant été calculé à l'étape précédente, les angles θ_{c} et θᵢ se calculent facilement.

Par ailleurs, une fois θ_{c} déterminé, h₂ s'en déduit de la manière suivante : ${h}_{2} = rsin \left({θ}_{c}\right) + {h}_{1}$
r étant la distance radiale mesurée par l'antenne radar.

Les équations (28), (29), (30) permettent donc d'obtenir les valeurs estimées de θ_{c}, θᵢ, et h₂.

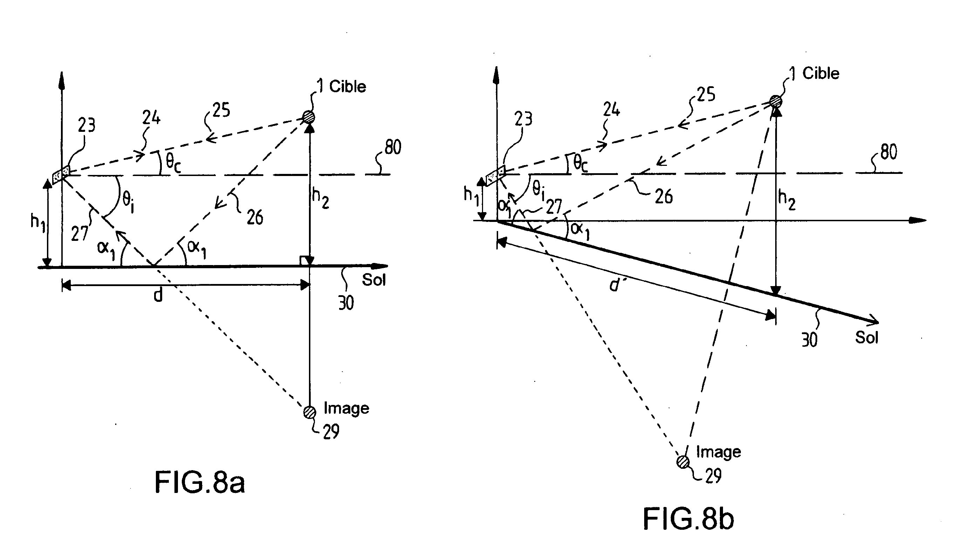

Les figures 8a et 8b mettent en évidence la différence entre les résultats obtenus dans le cas où l'on a un sol horizontal et dans le cas où il ne l'est pas. La figure 8a représente le cas d'un sol horizontal et notamment les grandeurs caractéristiques de l'élévation : θ_{c}, θᵢ, et h₂. Le principe de construction de la réflexion quasi-spéculaire du rayon ré-émis par la cible 26 est que les angles d'incidence du signal 26 et de réflexion du signal 27 par rapport au plan de réflexion sont supposés égaux à un angle α_{I}. La hauteur h₂, qui intervient dans les équations précédentes, correspond en réalité à la hauteur de la cible par rapport au plan de réflexion, qui ici est confondu avec le sol, et non pas à la hauteur de la cible par rapport au sol à sa verticale. Si l'on considère la figure 8b, lorsque le sol n'est pas horizontal, l'image de la cible n'a pas la même position que sur la figure 8a. En effet, l'image est la projection symétrique de la cible par rapport au plan de réflexion qui, dans le cas de la figure 8b, n'est pas horizontal. La hauteur h₂ de la cible par rapport au plan de réflexion sera donc différente dans le cas d'un sol non horizontal. L'estimation de l'élévation peut ainsi être biaisée et il peut être nécessaire d'affiner le résultat.

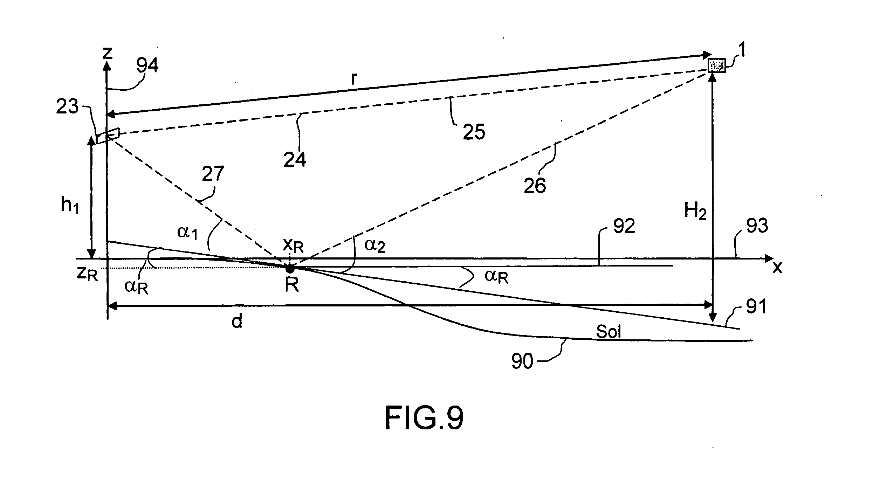

La figure 9 représente le phénomène de réflexion en présence d'un sol 90 non plan et non horizontal, le profil du sol entre le radar et la cible étant connu. Les éléments suivants de la figure 1 et 2 sont représentés sur la figure :
- la cible 1 représentée de manière ponctuelle,
- la ligne 23 de l'antenne située à une hauteur h₁ du sol,
- la distance radiale r entre le radar et la cible,
- la distance d horizontale entre le radar et la cible,
- le signal 24 émis par la ligne 23 et ré-émis en un signal 25 de manière directe par la cible 1,
- le signal 26 ré-émis en direction du sol par la cible et sa réflexion 27 sur le sol.

La hauteur H₂ représente la hauteur de la cible par rapport au plan 91 tangent au sol en un point R appelé point de réflexion. La détermination du point de réflexion passe par le calcul de sa position dans le référentiel du radar. La position de R est caractérisée par ses coordonnées X_{R} et Z_{R} respectivement selon l'axe horizontal 93 et l'axe vertical 94 ainsi que par l'angle α_{R} formé entre la pente 91 du sol en ce point et l'horizontale 92.

Le profil du sol est supposé connu, ce qui donne accès à la connaissance de Z_{R} et α_{R} pour toutes les positions potentielles du point R c'est à dire que Z_{R}=f(X_{R}), la fonction f étant connue, et α_{R}=g(X_{R}), la fonction g étant également connue. Le principe utilisé pour calculer les coordonnés du point R est basé sur le fait que les angles de réflexion et d'incidence du signal ré-émis par la cible en direction du sol sont égaux en ce point. Ils sont représentés respectivement sur la figure par les angles α₁ et α₂. En considérant que les angles sont faibles, l'hypothèse suivante est prise: tan(α) = sin(α) = α, α étant l'un quelconque des angles représentés sur la figure. Par construction et en prenant l'hypothèse énoncée ci-avant on obtient les relations suivantes pour α₁ et α₂: ${α}_{1} = \frac{{h}_{1} - {z}_{R} + {x}_{R} \times {α}_{R}}{{x}_{R}}$ ${α}_{2} = \frac{{h}_{2}}{d - {x}_{R}}$

Comme α₁ = α₂, on obtient alors la relation suivante :$\frac{{h}_{1} - {z}_{R} + {x}_{R} \times {α}_{R}}{{x}_{R}} = \frac{{h}_{2}}{d - {x}_{R}}$
avec h₁ la hauteur de l'antenne par rapport au sol et h₂, la hauteur d'élévation calculée dans le cas d'un sol plan et horizontal.

Les coordonnées du point R sont obtenues par minimisation de la fonction de coût suivante : $\left|C\left(R\right)\right| = \left|\frac{{h}_{1} - {z}_{R} + {x}_{R} \times {α}_{R}}{{x}_{R}}-\frac{{h}_{2}}{r - {x}_{R}}\right|$

Les coordonnées du point R ainsi obtenues permettent de définir le plan tangent au sol au point de réflexion, ou plan de réflexion, qui est par la suite assimilé au sol lui-même afin de ramener le cas du sol non plan et non horizontal au cas du sol non horizontal plus simple à traiter.

Une fois les coordonnées du point R calculées et notamment l'angle α_{R}, une correction est appliquée sur la hauteur d'élévation obtenue pour un sol plan et horizontal. La hauteur h₂ par rapport au sol horizontal devient alors la hauteur H₂ par rapport au plan de réflexion. Cette hauteur H₂ est donnée par la relation suivante : ${H}_{2} = {h}_{2} + {z}_{R} + \left(d-{x}_{R}\right) \times {α}_{R}$
où d représente la distance entre la cible et le radar projetée sur l'horizontale 92. On obtient ainsi la valeur corrigée pour la hauteur de la cible par rapport au plan de réflexion pour un sol non plan et non horizontal.

L'estimation ainsi obtenue pour l'élévation peut être avantageusement améliorée par un calcul de corrélation en amplitude phase du signal reçu avec une réplique prédéfinie aussi nommé CHA ou Correlation Height Algorithm.

Un des avantages du procédé selon l'invention est d'améliorer la localisation en élévation tout en conservant une dimension d'antenne constante, et une possibilité de veille dans un domaine angulaire étendu. La stabilité des résultats obtenus dans le domaine de couverture sans élargissement de lobe et sans affaiblissement est également appréciable.

D'autre part, la simplicité du traitement mis en oeuvre permet son application à moindre coût. Il nécessite également une capacité de calcul raisonnable étant donné que l'on peut limiter le nombre de voix de réception. En effet un petit nombre de mesures suffit pour obtenir une bonne estimation de l'élévation.

Un autre avantage de l'invention est que le procédé peut être utilisé aussi bien sur une antenne réseau complète que sur une antenne lacunaire. De plus elle peut aussi bien s'appliquer pour une antenne comportant des réseaux uniformes ou non uniformes.

Dans l'exemple de mise en oeuvre de l'invention, l'antenne de réception des signaux ré-émis par la cible correspond à l'antenne du radar émettant le signal de détection. Cette antenne pourrait être différente de l'antenne d'émission.

## Revendications

1. Procédé de détermination de l'élévation d'une cible (1) proche du sol par un système de détection électromagnétique (3) comportant une antenne de réception constituée de réseaux d'éléments (22) rayonnants, ledit procédé extrayant la mesure de l'élévation à partir de l'amplitude d'un signal d'interférence reçu par l'antenne (41), produit par un signal (25) émis directement par la cible et par un signal (26) émis par la cible en direction du sol puis réfléchi par le sol vers le radar, ledit signal d'interférence (41) étant échantillonné au niveau des sous-réseaux (22), la mesure de l'élévation étant établie à partir de l'amplitude du signal d'interférence échantillonné, **caractérisé en ce que** :
- la fréquence spatiale f du signal échantillonné, est la valeur qui minimise la fonction suivante : $J \left(U\right) = {\sum }_{i , k} \left|{r}_{i + k}+{r}_{i - k}-2⁢{r}_{i} cos \left(2⁢πUk Δ\right)\right|$
avec
• rᵢ₊ₖ représentant le résultat de la soustraction entre la valeur du signal reçu au niveau du sous-réseau d'ordre i+k et la valeur du signal reçu au niveau du sous-réseau d'ordre i+k+1, rᵢ₋ₖ représentant le résultat de la soustraction entre la valeur du signal reçu au niveau du sous-réseau d'ordre i-k et la valeur du signal reçu au niveau du sous-réseau i-k-1 ;
• Δ représentant la distance entre les centres de phases de deux sous-réseaux consécutifs,
- le rapport entre la hauteur h₂ de la cible par rapport au sol et la distance d projetée au sol entre le radar et la cible s'exprime en fonction de la fréquence spatiale f du signal d'interférence calculée selon la relation suivante : h ₂/*d* = λ*f* / 2 où λ est la longueur d'onde du signal émis.

2. Procédé selon la revendication 1, **caractérisé en ce que** le système émet un signal de détection vers la cible, le signal d'interférence étant produit par le signal (25) ré-émis directement par la cible et le signal (26) ré-émis par la cible en direction du sol puis réfléchi par le sol vers le système de détection.

3. Procédé selon l'une quelconque des revendications 1 et 2, **caractérisé en ce que** les sous-réseaux (22) correspondant chacun à une ligne d'éléments rayonnants sont disposés de manière horizontale, parallèle et uniforme sur l'ensemble de l'antenne.

4. Procédé selon la revendication 3, **caractérisé en ce que** les sous-réseaux (22) se situent dans un plan sensiblement vertical.

5. Procédé selon l'une quelconque des revendications précédentes, **caractérisé en ce que** la hauteur d'élévation h₂ est déterminée pour un sol non plan et non horizontal à partir :
• du point de réflexion R du signal ré-émis par la cible vers le sol (26) sur ce dernier,
• de la hauteur d'élévation déterminée pour un sol plan et horizontal,
L'expression de l'égalité entre les angles d'incidence du rayon ré-émis par la cible vers le sol (26) et celui réfléchi par le sol avec le plan tangent au sol au point de réflexion (27) permettant d'obtenir les coordonnées (X_{R}, Z_{R}) du point de réflexion R ainsi que l'angle α_{R} entre le plan tangent au sol (91) au point R et l'horizontale (80) à partir de la fonction de coût suivante : $\left|C\left(r\right)\right| = \left|\frac{{h}_{1} - {z}_{R} + {x}_{R} \times {α}_{R}}{{x}_{R}}-\frac{{h}_{2}}{d - {x}_{R}}\right|$
où h₁ représente la hauteur par rapport au sol de l'antenne, h₂ représente l'estimation de la hauteur d'élévation calculée dans le cas d'un sol plan et horizontal, et les valeurs (X_{R}, Z_{R}, α_{R}) minimisant cette fonction sont les coordonnées du point de réflexion R.

6. Procédé selon la revendication 5, **caractérisé en ce que** l'obtention de la valeur de l'angle α_{R} entre le plan tangent en R au terrain et l'horizontale permet de corriger la hauteur de la cible par rapport au plan tangent en une valeur H₂ de la manière suivante : *H*₂=*h*₂+*z_{R}*+(*d-x_{R}*)×α*_{R}* avec h₂ la hauteur calculée de la cible par rapport au sol dans le cas d'un sol plan et horizontal et d étant la distance projetée au sol de la cible à l'antenne.

7. Procédé selon l'une quelconque des revendications précédentes, **caractérisé en ce que** le traitement selon l'invention est amélioré par un traitement CHA.

8. Procédé selon l'une quelconque des revendications précédentes, **caractérisé en ce que** l'antenne utilisée est une antenne lacunaire.

9. Procédé selon l'une quelconque des revendications précédentes, **caractérisé en ce que** la cible comporte un émetteur actif.

10. Procédé selon l'une quelconque des revendications 1 à 8, **caractérisé en ce que** la cible est un réflecteur passif.

11. Procédé selon l'une quelconque des revendications précédentes, **caractérisé en ce que** la cible est un drône en phase d'atterrissage.

12. Procédé selon la revendication 1, **caractérisé en ce que** la comparaison de l'amplitude du coefficient de réflexion avec un seuil fixé est préalablement effectuée, la hauteur h₂ de la cible étant déterminée par un traitement de type monopulse si la valeur de l'amplitude du coefficient de réflexion est inférieure à ce seuil.

## Claims

1. A process for determining the elevation of a target (1) which is close to the ground using an electromagnetic detection system (3) comprising a receiving antenna consisting of arrays of radiating elements (22), said process extracting the measured value of the elevation from the amplitude of an interference signal received by said antenna (41), produced by a signal (25) emitted directly by the target and by a signal (26) emitted by the target towards the ground and then reflected by the ground towards the radar, said interference signal (41) being sampled at sub-arrays (22), the measured value of the elevation being established from the amplitude of the sampled interference signal,
**characterised in that**:
- the spatial frequency f of the sampled signal is the value that minimises the following function: $J \left(U\right) = {\sum }_{i , k} \left|{r}_{i + k}+{r}_{i - k}-2⁢{r}_{i} cos \left(2⁢πUk Δ\right)\right|$
wherein
• rᵢ₊ₖ represents the result of the subtraction between the value of the signal received at the sub-array of the order of i+k and the value of the signal received at the sub-array of the order of i+k+1, rᵢ₋ₖ representing the result of the subtraction between the value of the signal received at the sub-array of the order of i-k and the value of the signal received at the sub-array i-k-1;
• Δ represents the distance between the phase centres of two consecutive sub-arrays,
- the ratio between the height h₂ of the target relative to the ground and the distance d projected on the ground between the radar and the target being expressed as a function of the spatial frequency f of the interference signal calculated according to the following relation:
h₂/*d* = λ*f*/2, where λ is the wavelength of the emitted signal.

2. The process according to claim 1, **characterised in that** the system emits a detection signal towards the target, the interference signal being produced by the signal (25) re-emitted directly by the target and the signal (26) re-emitted by the target towards the ground and then reflected by the ground towards the detection system.

3. The process according to any one of claims 1 to 2, **characterised in that** the sub-arrays (22), which each correspond to a line of radiating elements, are arranged horizontally, in parallel and uniformly over the antenna as a whole.

4. The process according to claim 3, **characterised in that** the sub-arrays (22) are located in a substantially vertical plane.

5. The process according to any one of the preceding claims, **characterised in that** the height of elevation h₂ in the case of non-flat and non-horizontal ground is determined from:
• the reflection point R, on the ground, of the signal re-emitted by the target towards the ground (26),
• the height of elevation determined for flat and horizontal ground, the expression of the equality between the angles of incidence of the ray re-emitted by the target towards the ground (26) and that reflected by the ground with the plane that is tangential to the ground at the reflection point (27), allowing the coordinates (X_{R}, Z_{R}) of the reflection point R to be obtained, as well as the angle α_{R} between the plane that is tangential to the ground (91) at point R and the horizontal (80), from the following cost function: $\left|C\left(r\right)\right| = \left|\frac{{h}_{1} - {z}_{R} + {x}_{R} \times {α}_{R}}{{x}_{R}}-\frac{{h}_{2}}{d - {x}_{R}}\right|$
where h₁ represents the height of the antenna relative to the ground, h₂ represents the estimate of the calculated height of elevation in the case of flat and horizontal ground, and the values (X_{R}, Z_{R}, α_{R}) minimising this function are the coordinates of the reflection point R.

6. The process according to claim 5, **characterised in that** obtaining the value of the angle α_{R} between the plane that is tangential to the ground at R and the horizontal allows the height of the target in relation to the tangent plane to be corrected to an H₂ value as follows: *H₂* = *h₂* + *z_{R}* + *(d* - *x_{R}) x* α*_{R}*, where h₂ is the calculated height of the target in relation to the ground in the case of flat and horizontal ground and d is the distance projected on the ground from the target to the antenna.

7. The process according to any one of the preceding claims, **characterised in that** the processing according to the invention is enhanced by CHA processing.

8. The process according to any one of the preceding claims, **characterised in that** a lacunar antenna is used.

9. The process according to any one of the preceding claims, **characterised in that** the target comprises an active emitter.

10. The process according to any one of claims 1 to 8, **characterised in that** the target is a passive reflector.

11. The process according to any one of the preceding claims, **characterised in that** the target is a drone in the landing phase.

12. The process according to claim 1, **characterised in that** the comparison of the amplitude of the reflection coefficient with a fixed threshold is performed beforehand, the height h₂ of the target being determined by mono-pulse type processing if the value of the amplitude of the reflection coefficient is below said threshold.

## Patentansprüche

1. Verfahren zum Ermitteln der Elevation eines in Bodennähe befindlichen Ziels (1) mit einem elektromagnetischen Detektionssystem (3), das eine Empfangsantenne umfasst, die aus Anordnungen von strahlenden Elementen (22) besteht, wobei in dem Verfahren das Maß der Elevation von der Amplitude eines von der Antenne (41) empfangenen Interferenzsignals extrahiert wird, erzeugt von einem direkt von dem Ziel emittierten Signal (25) und von einem Signal (26), das vom Ziel in Richtung Boden emittiert und dann vom Boden zum Radar reflektiert wird, wobei das Interferenzsignal (41) an den Unteranordnungen (22) abgetastet wird, wobei das Maß der Elevation von der Amplitude des abgetasteten Interferenzsignals festgestellt wird,
**dadurch gekennzeichnet, dass**:
- die Raumfrequenz f des abgetasteten Signals der Wert ist, der die folgende Funktion minimiert: $J \left(U\right) = {\sum }_{i , k} \left|{r}_{i + k}+{r}_{i - k}-2⁢{r}_{i} cos \left(2⁢πUk Δ\right)\right|$
wobei
• rᵢ₊ₖ das Ergebnis der Subtraktion zwischen dem Wert des an der Unteranordnung der Ordnung i+k empfangenen Signals und dem Wert des an der Unteranordnung der Ordnung i+k+1 empfangenen Signals repräsentiert, wobei rᵢ₋ₖ das Ergebnis der Subtraktion zwischen dem Wert des an der Unteranordnung der Ordnung i-k empfangenen Signals und dem Wert des an der Unteranordnung i-k-1 empfangenen Signals repräsentiert;
• wobei Δ den Abstand zwischen den Phasenzentren von zwei aufeinander folgenden Unteranordnungen repräsentiert,
- wobei das Verhältnis zwischen der Höhe h₂ des Ziels relativ zum Boden und dem auf den Boden zwischen dem Radar und dem Ziel projizierten Abstand d in Abhängigkeit von der Raumfrequenz f des Interferenzsignals ausgedrückt wird, berechnet gemäß dem folgenden Verhältnis:
h₂/*d* = λ*f*/2, wobei λ die Wellenlänge des emittierten Signals ist.

2. Verfahren nach Anspruch 1, **dadurch gekennzeichnet, dass** das System ein Detektionssignal zum Ziel emittiert, wobei das Interferenzsignal von dem direkt vom Ziel erneut emittierten Signal (25) und dem Signal (26) erzeugt wird, das vom Ziel zum Boden erneut emittiert und dann vom Boden zum Detektionssystem reflektiert wird.

3. Verfahren nach einem der Ansprüche 1 bis 2, **dadurch gekennzeichnet, dass** die Unteranordnungen (22), die jeweils einer Linie von strahlenden Elementen entsprechen, horizontal, parallel und gleichmäßig über die gesamte Antenne angeordnet sind.

4. Verfahren nach Anspruch 3, **dadurch gekennzeichnet, dass** sich die Unteranordnungen (22) in einer im Wesentlichen vertikalen Ebene befinden.

5. Verfahren nach einem der vorherigen Ansprüche, **dadurch gekennzeichnet, dass** die Elevationshöhe h₂ für einen nicht flachen und nicht horizontalen Boden ermittelt wird von:
• dem Reflexionspunkt R des vom Ziel zurück zum Boden (26) erneut emittierten Signals auf dem Boden,
• der Elevationshöhe, ermittelt für einen flachen und horizontalen Boden, wobei mit Hilfe des Ausdrucks der Gleichheit zwischen den Einfallswinkeln des vom Ziel zurück zum Boden (26) erneut emittierten und des vom Boden reflektierten Strahls mit der Tangentialebene zum Boden am Reflexionspunkt (27) die Koordinaten (X_{R}, Z_{R}) des Reflexionspunkts R sowie der Winkel α_{R} zwischen der Tangentialebene zum Boden (91) am Punkt R und der Horizontalen (80) anhand der folgenden Kostenfunktion erhalten werden können: $\left|C\left(r\right)\right| = \left|\frac{{h}_{1} - {z}_{R} + {x}_{R} \times {α}_{R}}{{x}_{R}}-\frac{{h}_{2}}{d - {x}_{R}}\right|$
wobei h₁ die Höhe der Antenne relativ zum Boden repräsentiert, h₂ die Schätzung der berechneten Elevationshöhe bei einem flachen und horizontalen Boden repräsentiert, und die diese Funktion minimierenden Werte (X_{R}, Z_{R}, α_{R}) die Koordinaten des Reflexionspunkts R sind.

6. Verfahren nach Anspruch 5, **dadurch gekennzeichnet, dass** es das Einholen des Wertes des Winkels α_{R} zwischen der Tangentialebene zum Boden bei R und der Horizontalen zulässt, dass die Höhe des Ziels in Bezug auf die Tangentialebene wie folgt auf einen H₂-Wert korrigiert wird: *H*₂ = *h*₂ + *z_{R}* + *(d - x_{R}) x* α*_{R}*, wobei h₂ die berechnete Höhe des Ziels in Bezug auf den Boden bei einem flachen und horizontalen Boden und d die auf den Boden projizierte Distanz vom Ziel zur Antenne ist.

7. Verfahren nach einem der vorherigen Ansprüche, **dadurch gekennzeichnet, dass** die Verarbeitung erfindungsgemäß durch eine CHA-Verarbeitung verbessert wird.

8. Verfahren nach einem der vorherigen Ansprüche, **dadurch gekennzeichnet, dass** die benutzte Antenne eine lakunäre Antenne ist.

9. Verfahren nach einem der vorherigen Ansprüche, **dadurch gekennzeichnet, dass** das Ziel einen aktiven Emitter umfasst.

10. Verfahren nach einem der Ansprüche 1 to 8, **dadurch gekennzeichnet, dass** das Ziel ein passiver Reflektor ist.

11. Verfahren nach einem der vorherigen Ansprüche, **dadurch gekennzeichnet, dass** das Ziel eine Drohne in der Landephase ist.

12. Verfahren nach Anspruch 1, **dadurch gekennzeichnet, dass** der Vergleich der Amplitude des Reflexionskoeffizienten mit einem festen Schwellenwert vorher durchgeführt wird, wobei die Höhe h₂ des Ziels mittels einer monopulsartigen Verarbeitung ermittelt wird, wenn der Wert der Amplitude des Reflexionskoeffizienten unter dem Schwellenwert liegt.
